# EUROPEAN PATENT APPLICATION

(11) **EP 2 149 443 A1**
(43) Date of publication of application: **03.02.2010**
(21) Application number: 09166851.7
(22) Date of filing: 30.07.2009
(51) Int. Cl.: B29C 45/16, B60R 13/02

(54) **Multi-shot co-injected vehicle interior trim panel**

(30) Priority: 01.08.2008 US 85572 P
(71) Applicant: International Automotive Components Group North America, Inc., Dearborn, MI 48126 (US)
(72) Inventor: Adams, Robert J., Ann Arbor, MI 48105 (US)
(74) Representative: Liesegang, Eva

(57) **Abstract**

An interior vehicle trin panel is provided with a substrate member that is injection molded in a first injection molding operation. A cover member that is injection molded in a second injection molding operation is provided. The cover member has a first layer and a second layer. The first layer and second layers are co-injection molded into a molding tool such that the mold has a mold cavity with a shape that corresponds with the cover member. A method of for forming an interior vehicle trim panel is also provided.

## Description

### CROSS-REFERENCE TO RELATED APPLICATION

This application claims the benefit of U.S. provisional application Serial No. 61/085,572 filed August 1, 2008, which is incorporated herein by reference.

### BACKGROUND

### 1. Technical Field

Multiple embodiments of the present invention relate to vehicle interior trim panels formed through multi-shot co-injection molding.

### 2. Background

Automotive manufacturers continue to strive to provide improved vehicle interiors. Accordingly, vehicle interiors are typically manufactured with various trim members to enhance the aesthetic appearance of the interior. For example, vehicle instrument panels or dashboards, consoles and doors are generally provided with trim panels or assemblies to improve the aesthetic appearance of these components.

### SUMMARY

In at least one embodiment, an interior vehicle trim panel is provided. The trim panel has a substrate member that is injection molded in a first injection molding operation. The trim panel is then formed with a cover member having a first layer and a second layer. The first layer is injection molded into a molding tool. The mold has a mold cavity with a shape that corresponds with the cover member. The first layer is formed out of a pliable plastic material to form an outer skin layer for the cover member. In at least one embodiment, the first material to form the first layer is injection molded to fill approximately thirty to seventy percent of the mold cavity, depending on cavity geometry. Once the first material to form the first layer fills the approximately between thirty and seventy percent of the mold cavity, a second material to form a second layer is injection molded to fill the mold cavity to a desired fill level of the mold cavity, which may be equal to one hundred percent of the mold cavity. The second layer is formed out of a flexible foam material that is generally compressible and generally forms a core layer. The vehicle trim panel that is formed has a rigid substrate member with a cover member that has a pliable outer skin layer, made out of the first material, and a flexible and compressible core layer, made out of the second material. The vehicle trim panel provides a flexible and compressible injection molded trim member for a vehicle interior having a foam core in a cost effective manner.

### BRIEF DESCRIPTION OF THE DRAWINGS

Figure 1 is a cross-sectional view of an embodiment of a automotive interior trim assembly;
Figures 2-4 are schematic cross-sectional views depicting embodiments of a manufacturing process of the trim assembly of Figure 1;
FIGURE 5 is a cross-sectional view of a molding tool for forming an interior trim panel after injection of a first layer;
FIGURE 6 is a cross-sectional view of the molding tool of Figure 5 during injection of a second layer;
FIGURE 7 is a perspective view of the interior trim panel and a portion of the molding tool of Figure 6; and
FIGURE 8 is a cross-sectional view of the interior trim panel of Figure 7.

### DETAILED DESCRIPTION OF EMBODIMENTS

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

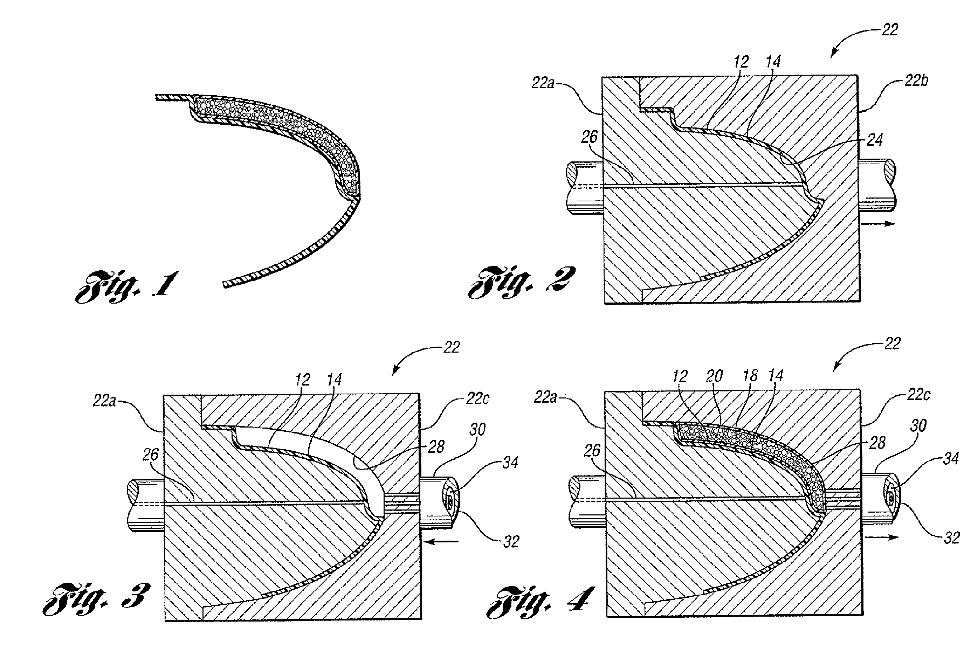

Referring to Figure. 1, a vehicle interior trim assembly is illustrated and generally referenced by numeral 10. In this embodiment, the interior trim assembly is depicted as an automotive instrument panel, or dashboard 10 (in cross section), having a relatively rigid substrate member 12, which forms the structural frame of the trim assembly 10. The substrate member 12 has at least one area 14 for receiving a cover member 16 which provides a soft-touch feel to the instrument panel 10. To provide an improved soft-touch feel, the cover member 16 comprises an outer layer 20 formed out of a first material and an inner layer 18 made out of a second material. The first material is a pliable plastic material and the second material is a flexible and compressible foam or cushion material. As illustrated, the inner layer 18 is encased by the outer layer 20, which forms a skin over the inner layer 18. Because the inner layer 18 of the cover member 16 is flexible and compressible, the inner layer 18 will deform and compress when a force is applied to the outer layer 20, thereby enhancing the soft-touch feel of that portion of the instrument panel 10, which is covered by cover member 16.

The instrument panel 10 may be formed by injection molding using multiple shots. The substrate member 12 may be made out of thermoplastic olefin, acrylonitrile butadiene styrene, styrene maleic anhydride, polycarbonate/acrylonitrile butadiene styrene alloy, or any other suitable material suitable for molding the relatively rigid substrate member 12. The substrate 12 may have a hardness of approximately R65 as measured on a Rockwell scale or 120 as measured by ASTM test method No. D785. The substrate member 12 may be made with or without fillers such as talc or glass fiber. The outer layer 20 of the cover member 16 is formed out of a pliable resin material, which includes but is not limited to a thermoplastic elastomer, thermoplastic vulcanizate, thermoplastic polyurethane, and polyvinyl chloride. Other materials may be employed for the outer layer 20 may have a hardness in a range of 50 to 90 Shore A durometer, as measured by ASTM test method No. D2240 type A. The co-injected inner layer 18 is made out of a flexible and compressible material that is not a rigid foam. In one embodiment, the inner layer 18 is made out of a resin compatible with the material forming the outer layer 20 for cohesive bond requirements. The material of the inner layer 18 may have a similar chemical composition to the outer layer 20 material although the inner layer 18 material may have a hardness of 20 to 50 Shore A durometer, as measured by ASTM test method No. D2240 type A. The material of the inner layer 18 may be enhanced by adding chemical blowing agents or by injection of inert gasses such as but not limited to carbon dioxide or nitrogen during the molding operation to create a foam cell structure, which further increases the compressibility of the cover member 16.

In at least one embodiment, the substrate 12 may have a thickness of approximately 1.8 to 3.5 mm. Of course, the thickness of the substrate 12 may vary throughout a single substrate 12. The core layer 18 may have a thickness of approximately 2.0 to 5.5 mm. Of course, the thickness of the core layer 18 may vary throughout a single core layer 18. The outer layer 20 may have a varying thickness of a nominal thickness of 0.5 to 2.0 mm up to 6.0 mm locally. Of course, the thickness of the outer layer 20 may vary throughout a single outer layer 20.

In at least one embodiment, the vehicle interior trim assembly 10 is formed in a two-shot molding operation, as will be described with reference to Figures 2-4. As shown in Figure 2, the substrate member 12 of instrument panel 10 is formed during the first shot of a two-shot molding operation by injecting a first material into a mold 22 configured to form the substrate member 12. In the embodiment shown, the mold 22 comprises first and second halves 22a, 22b which may be assembled together to define an interior cavity 24 having the general shape of the substrate member 12. The first material is injected into the cavity 24 through a sprue 26 as known in the art. After the first material has been injected into the mold 22 to form the substrate member 12, the second mold portion 22b may be removed and replaced with a third mold portion 22c, which is configured such that the first and third mold portions 22a, 22c define a cavity 28 for forming the cover member 16 during the second shot of the two-shot mold process. As seen in Figure 3, the substrate member 12 is retained in the mold 22 so that the cover member 16 may be formed directly on the target area 14 during the second shot of the molding operation. The third mold portion 22c includes at least one sprue member 30 having first and second annular sprues 32, 34, whereby second and third materials may be co-injected into cavity 28 to form the cover member 16, as shown in Figure 4. Advantageously, the co-injected second and third materials form the cover member 16 such that the second material forms the outer, skin layer 20 of the cover member 16 and the third material forms the inner, foam layer 18 of the cover member 16. In one embodiment, the inner foam layer 18 is completely encased within the outer skin layer 20. The finished instrument panel 10 is thereafter removed from the mold 22.

While the interior trim assembly has been shown and described herein as an instrument panel 10, it will be recognized that the interior trim assembly of the present invention may alternatively be formed to create a door trim panel, an armrest, a door handle, a console, or other interior components of an automobile.

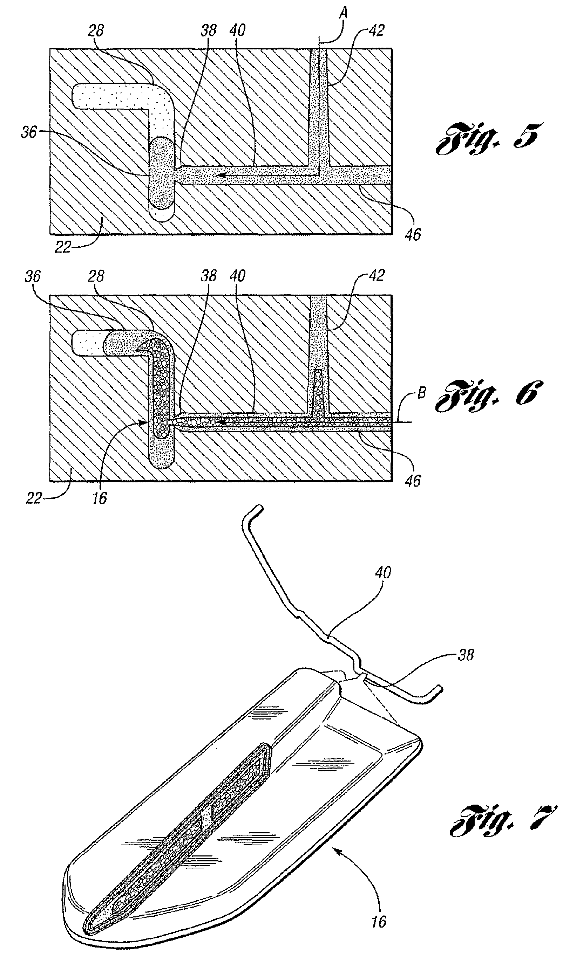

Referring now to Figures 5-6, a portion of an embodiment of the molding tool 22 of Figures 3-4 is shown. The molding tool 22 may have a first mold part and a second mold part to collectively form a mold cavity 28, as shown in Figures 3-4. Additionally, the molding tool 22 may retain the substrate member 12, as depicted in Figures 3-4, to mount the cover member 16 to the substrate member 12. As depicted, formation of the cover member 16 is illustrated, which may be subsequent to forming the substrate member 12.

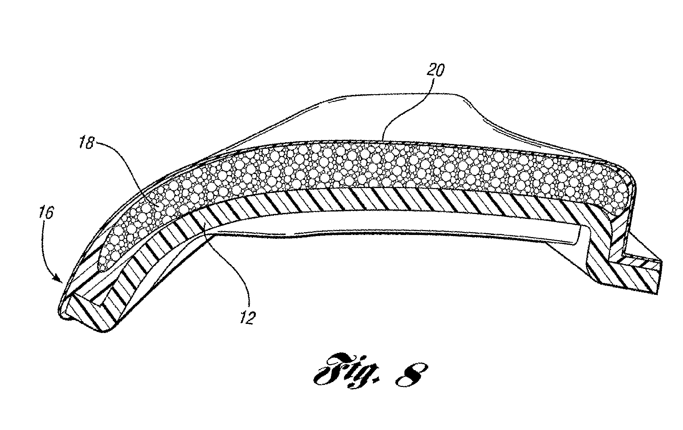

In Figure 5, the mold cavity 28 of the molding tool 22 is partially filled with a second material 36, after an injection. The second material 36 is injected into the mold cavity 28 through a gate 38. The gate 38 is connected to a runner 40. The runner 40 is in turn connected to a sprue 42. The second material 36 is injected into the sprue 42 to the runner 40 in a direction indicated by arrow A. The second material 36 then passes through the gate 38 into the mold cavity 28 to partially form the cover member 16, which is illustrated fully formed in Figures 7-8. In at least one embodiment, the second material 36 is injected to fill approximately thirty to seventy percent of the mold cavity 28, depending on the geometry of the mold cavity 28.

As illustrated in Figure 6, following injection of the second material 36 into the mold cavity 28, a third material 44 is injected from a sprue 46 to the runner 40, through the gate 38 and into the mold cavity 28 in a direction indicated by arrow B. In at least one embodiment, the injection of the third material 44 immediately follows injection of the second material 36. The third material 44 forces the first material 36 to fill into the mold cavity 28 so that the second material 36 generally surrounds the third material 44. The second material 36 and the third material 44 may fill one hundred percent of the mold cavity 28.

The second material 36 and the third material 44 both pass through the same runner 40 and gate 38 so that the second material 36 and the third material 44 are co-injected. The molding tool 22 may heat the second material 36 and the third material 44 internally in a manifold within the molding tool 22 or externally with injection units connected to each of the sprues 42, 46.

In at least one embodiment, the second material 36 is a pliable plastic, as discussed above with reference to the outer layer 20. In at least one embodiment, the third material 44 is flexible and compressible, as discussed above with reference to the inner layer 18. Any type of flexible and compressible foam may be employed for the second material 44. Current available products that are produced utilizing co-injected foam merely utilize rigid structural foam with limited compressibility. Thus, the cover member 16 according to at least one of the embodiments of the present invention has an improved haptics because touching the cover member 16 is more flexible and compressible when compared to the prior art. Additionally, aesthetics of the cover member 16 according to at least one of the embodiments of the present invention are improved by providing a pliable plastic for the second material 36 and a flexible and compressible material for the third material 44 because the cover member 16 is flexible and compressible but is not deformed.

Depending upon part geometry, part size, and material selection, injection temperature and pressure are determined, as is known in the prior art.

With reference now to Figures 7-8, the cover member 16 is illustrated fully formed. The cover member 16 may have any suitable geometry and part size to be employed within the interior of the vehicle.

After the second material 36 and the third material 44 are successively injected into the mold cavity 28, the cover member 16 may be cooled by circulating water or air cooled as is well known in the art.

The vehicle cover member 16 is a flexible and compressible injection molded trim member for a vehicle interior. The formed cover member 16 has a skin layer 20 formed out of the second material 36 and a foam core layer 18 formed out of the third material 44. The cover member 16 is formed in a cost effective manner because multiple processes and/or tools are not necessarily employed to form the cover member 16. Additionally, utilization of a flexible and compressible third material 44 adds compressibility to the core layer 18 of the cover member 16, which is desired to deliver a cover member 16 that has a pliable plastic skin layer 20, while also providing a soft and compressible high-quality feel for the cover member 16 overall.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An interior vehicle trim panel comprising:
a substrate member that is injection molded in a first injection molding operation; and
a cover member that is co-injection molded in a second injection molding operation, the cover member having a first layer and a second layer, the first layer being injection molded into a molding tool such that the mold has a mold cavity with a shape that corresponds with the cover member.

2. The interior vehicle trim panel of claim 1 wherein the first layer is formed out of a pliable plastic material to form an outer skin layer for the cover member.

3. The interior vehicle trim panel of claim 2 wherein the pliable plastic material to form the first layer is injection molded to fill approximately thirty to seventy percent of the mold cavity.

4. The interior vehicle trim panel of one of the preceding claims wherein a second material to form a second layer is injection molded to fill the mold cavity to a desired fill level of the mold cavity.

5. The interior vehicle trim panel of one of the preceding claims wherein the second material is a flexible foam material that is generally compressible and generally forms a core layer.

6. The interior vehicle trim panel of one of the preceding claims wherein the substrate member and the cover member collectively form an automotive instrument panel.

7. The interior vehicle trim panel of one of the preceding claims wherein the substrate member has a thickness of approximately 1.8 to 3.5 millimeters.

8. The interior vehicle trim panel of one of the preceding claims
wherein the first layer of the cover member has a varying thickness of 0.5 to 6.0 millimeters.

9. The interior vehicle trim panel of one of the preceding claims wherein the second layer of the cover member has a thickness of approximately 2.0 to 5.5 millimeters.

10. A method for forming an interior vehicle trim panel comprising:
providing a first mold member and a second mold member collectively forming a first cavity;
injection molding a first material to form a rigid substrate member within the first cavity;
providing a third mold member to cooperate with one of the first mold member and the second mold member to collectively form a second cavity; and
co-injection molding a second material and a third material within the second cavity to form a cover member having a first layer formed out of the second material and a second layer formed out of the third material.

11. The method of claim 10 further comprising co-injection molding the second material to form the first layer of the cover member to fill approximately thirty to seventy percent of the second mold cavity.

12. The method of claim 10 or 11 further comprising co-injection molding the third material to form the second layer of the cover member to fill approximately thirty to seventy percent of the second mold cavity such that the second and third materials collectively fill one hundred percent of the second mold cavity.

13. The method of one of claims 10 to 12 wherein the second material is a pliable plastic material to form an outer skin layer for the cover member.

14. An interior vehicle trim panel formed by the method of one of claims 10 to 13.

15. An interior vehicle trim panel comprising:
a rigid substrate member; and
a cover member having a pliable outer skin layer, made out of a first material to form an outer skin layer for the cover member, and a flexible and compressible core layer, made out of a second material to form a second layer is injection molded to fill the mold cavity to a desired fill level of the mold cavity;
wherein the pliable plastic material to form the first layer of the cover member is injection molded to fill approximately thirty to seventy percent of the mold cavity;
wherein the second material is a flexible foam material that is generally compressible and generally forms a core layer; and
wherein the substrate member and the cover member collectively form an automotive instrument panel.
